(19) Europäisches Patentamt
European Patent Office
Office européen des brevets

(11) Numéro de publication : 0 281 430 B1

(12) # FASCICULE DE BREVET EUROPEEN

(45) Date de publication du fascicule du brevet : **05.06.91 Bulletin 91/23**

(51) Int. Cl.$^5$ : **E21B 43/22**, E21B 43/24

(21) Numéro de dépôt : **88400049.8**

(22) Date de dépôt : **11.01.88**

(54) **Procédé pour améliorer le balayage au gaz d'une formation pétrolière comprenant l'utilisation de mousses à base de tensio-actifs à groupement perfluore.**

(30) Priorité : **20.01.87 FR 8700705**

(43) Date de publication de la demande : **07.09.88 Bulletin 88/36**

(45) Mention de la délivrance du brevet : **05.06.91 Bulletin 91/23**

(84) Etats contractants désignés : **AT DE GB IT NL**

(56) Documents cités :
**EP-A- 0 173 176**
**EP-A- 0 189 698**
**FR-A- 2 035 589**
**FR-A- 2 088 699**
**FR-A- 2 088 941**
**FR-A- 2 153 489**
**FR-A- 2 477 144**
**US-A- 3 257 407**
**US-A- 4 086 964**
**US-A- 4 108 782**

(73) Titulaire : **INSTITUT FRANCAIS DU PETROLE**
**4, Avenue de Bois-Préau**
**F-92502 Rueil-Malmaison (FR)**
Titulaire : **ATOCHEM**
**4 & 8, Cours Michelet La Défense 10**
**F-92800 Puteaux (FR)**

(72) Inventeur : **Robin, Michel**
**7, avenue du Maréchal Foch**
**F-78300 Poissy (FR)**
Inventeur : **Demay, Claude**
**5, rue Clément Ader**
**F-78180 Voisins le Brétonneux (FR)**

(74) Mandataire : **Andreeff, François et al**
**INSTITUT FRANCAIS DU PETROLE 4, avenue de Bois-Préau**
**F-92506 Rueil-Malmaison Cédex (FR)**

EP 0 281 430 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de récupération assistée d'hydrocarbures grâce à l'utilisation de mousses à base d'au moins un tensio-actif à groupement perfluoré pour améliorer le balayage au gaz en récupération assistée du pétrole.

L'art antérieur est illustré par le brevet EP 173.176 qui décrit l'utilisation de composés perfluorés pour contrôler la mobilité de l'eau en milieu poreux ou fissuré. Ils sont dans ce cas utilisés en tant qu'agent épaississant de l'eau. De plus, ces composés ne sont pas utilisés en tant qu'agent moussant mais comme viscosifiant d'une phase aqueuse injectée seule.

Les composés à groupement perfluoré sont également connus, notamment par le brevet US 4.108.782, pour donner des mousses utilisables seuls ou en mélange pour des procédés de traitement de puits de pétrole. En particulier, ils permettent un nettoyage efficace des boues et des dépôts recueillis après des opérations d'acidification du puits. Le composé décrit dans ce brevet américain est par ailleurs un agent relativement peu moussant.

L'invention s'applique notamment à la récupération assistée d'huile à partir d'un réservoir souterrain de pétrole dans lequel, par suite de la faible densité du gaz de balayage, de sa plus grande mobilité et/ou de la différence de perméabilité des couches de terrain (strates) à balayer, le gaz tend à suivre des chemins privilégiés, en particulier à la partie supérieure du réservoir.

En effet, en récupération assistée du pétrole, lors de l'injection de gaz, un déplacement satisfaisant de l'huile peut être obtenu dans les zones effectivement balayées par le gaz. Malheureusement, du fait de sa densité, ce dernier tend à s'écouler préférentiellement au toit du réservoir, notamment lorsque l'huile qu'il contient est visqueuse. Une fois le (ou les) puits de production atteint(s) par le fluide injecté, le balayage devient pratiquement inefficace dans les zones où demeure encore de l'huile. Il en est de même pour les gisements hétérogènes ou fissurés, dans lesquels des drains de plus forte perméabilité causent la percée prématurée du gaz, tandis que l'huile tend à demeurer dans les couches les moins perméables.

Pour améliorer le coefficient de balayage, on peut envisager de bloquer l'accès du gaz aux zones préférentiellement envahies par le fluide de balayage soit du fait de la gravité soit du fait du contraste de perméabilité.

Il est connu, notamment par le brevet US-4.086.964, d'utiliser l'injection de mousses produites à partir de tensio-actifs moussants tels que des sulfonates à chaine hydrocarbonée qui viennent générer avec le gaz injecté, une mousse qui peut se déplacer au sein du milieu poreux et venir bloquer les cheminements préférentiels au gaz.

Cependant, mis en contact d'une phase hydrocarbonée dans le gisement, les tensio-actifs hydrocarbonés présents dans les mousses ont tendance à migrer dans la phase huile. Leur concentration baissant dans les films constituant la mousse, il en résulte une dégradation mécanique de cette dernière. La structure "mousse" ne peut être conservée ; elle disparaît au profit d'un mélange eau + tensio-actif/huile/gaz ; ces trois phases ont alors tendance à cheminer séparément au sein du milieu poreux. La méthode perd alors toute son efficacité.

Pour pallier cet inconvénient, on a donc cherché d'autres produits dont les propriétés moussantes se conservent au sein du gisement et qui forment des mousses mécaniquement stables en présence d'une phase hydrocarbonée.

Pour répondre à cet objectif, l'invention propose un procédé de récupération assistée d'hydrocarbures présents dans un réservoir souterrain dans lequel on injecte, au moins une fois, par au moins un puits d'injection, soit simultanément soit séparément, un bouchon d'une solution de préférence aqueuse d'au moins un composé tensio-actif et un bouchon d'un gaz et/ou de vapeur d'eau de façon à constituer une mousse. On balaie au moins en partie ledit réservoir avec cette mousse et on récupère les hydrocarbures par au moins un puits de production. De manière plus précise, le composé tensio-actif répond à la formule générale (I) :

$$R_F - Y - X \quad (I)$$

dans laquelle $R_F$ est un radical carboné perfluoré,
Y est une liaison directe ou un radical bivalent hydrocarboné qui peut contenir au moins un atome d'oxygène, de soufre et/ou d'azote, et
X est un groupement hydrophile, qui peut comprendre par exemple un ammonium quaternaire, une bétaïne ou une sulfobétaïne.

Le radical $R_F$ est de préférence un radical perfluoroalkyle, linéaire ou ramifié, contenant de 1 à 20 atomes de carbone, avantageusement 4 à 14 atomes de carbone et plus particulièrement 6 à 10 atomes de carbone.

Le radical bivalent hydrocarboné comprend de préférence un carbone terminal adjacent au radical carboné perfluoré.

Le radical Y peut éventuellement comprendre un groupement –CF = CH– terminal, le carbone insaturé

fluoré étant adjacent au radical perfluoré, comme cela est décrit dans le brevet FR 2153 489.

Comme exemples de tensioactifs à groupement perfluoré avantageusement utilisables à titre individuel ou en mélanges, on peut citer, parmi les tensioactifs cationiques, ceux répondant à la formule (II) plus particulière:

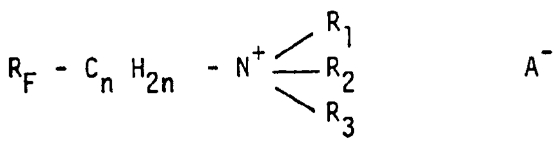

(II)

où : $R_F$ est défini comme ci-dessus dans la formule (I),
$C_nH_{2n}-$ correspond au radical Y de la formule (I) et le reste de la molécule correspond au groupement X,
n est un nombre entier de 1 à 12, de préférence égal à 2,
Les symboles $R_1$, $R_2$ et $R_3$ identiques ou différents, représentent chacun un atome d'hydrogène ou un radical alkyle contenant de 1 à 8 atomes de carbone (de préférence méthyle), cycloalkyle contenant de 5 à 10 atomes de carbone, alkényle contenant de 2 à 8 atomes de carbone, cycloalkényle contenant de 5 à 10 atomes de carbone, hydroxyalkyle contenant 2 ou 3 atomes de carbone ou aryle (de préférence phényle), deux de ces symboles pouvant constituer ensemble un radical divalent lié à l'azote par deux simples liaisons (par exemple un radical aliphatique divalent saturé ou non contenant de 4 à 9 atomes de carbone), ou $R_1$, $R_2$ et $R_3$ constituent ensemble avec l'atome d'azote le reste d'une amine tertiaire aromatique dérivée de la pyridine et contenant de 5 à 18 atomes de carbone (de préférence la pyridine, les picolines, la quinoléïne, l'isoquinoléïne et l'acridine).
$A^-$ est un anion qui peut être celui d'un halogénure, d'un sulfate, d'un alkylsulfate, d'un phosphate, d'un sulfonate, d'un alkylsulfonate, d'un arylsulfonate, d'un alcanoate, d'un hydroxyle. Parmi ces anions on préfère ceux des halogénures tels que le fluorure, le chlorure, le bromure, et l'iodure, des sulfates tels que $HSO_4^-$, $SO_4^-$ et $CH_3SO_4^-$, des acétates tels que $CH_3$-$CO_2^-$ et $CF_3$-$CO_2^-$, l'hydroxyle OH et le paratoluène sulfonate.

Le radical $-C_nH_{2n}-$ selon la formule (II) peut avantageusement être un radical alkylène linéaire $-(CH_2)_n-$.

Ces composés de formule (II) et leur préparation ont été décrits dans les brevets suivants :
FR 1588 482, FR 2153 489, FR 2044 070, US 2727 923, US 3257 407, et US 3535 389.

Les composés ainsi préparés ne sont pas toujours purs et dans le brevet FR 2153 489, on décrit par exemple un mélange des deux dérivés suivants :

$$[C_xF_{2x+1} - CH_2 - CH_2 - NR_1R_2R_3]^+ A^- \text{ et}$$

$$[C_{x-1}F_{2x-1} - CF = CH - CH_2 - NR_1R_2R_3]^+ A^-$$

dûs à l'utilisation d'amines non pures dans la préparation.

Le radical Y contient dans ce cas un atome de fluor sur le carbone terminal qui est adjacent au groupement perfluoré $R_F$ et qui présente une insaturation.

On peut citer également à titre d'exemples des tensio-actifs à groupement perfluoré, avantageusement utilisables, les tensio-actifs amphotères répondant à la formule (III) plus particulière

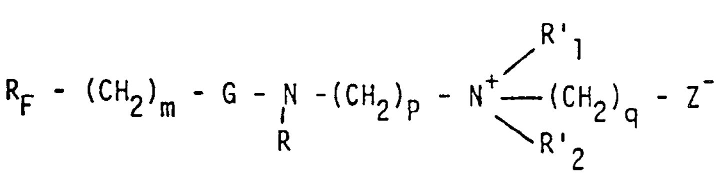

(III)

où

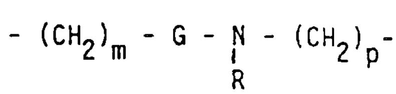

correspond au radical Y de la formule (I)

et où

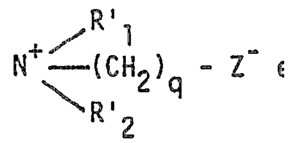

est le groupement X,
$R_F$ est le groupement perfluoré, défini dans la formule (I),
m est zéro ou un entier de 1 à 12, de préférence égal à 2,
G est un radical bivalent, CO ou $SO_2$,
R est un atome d'hydrogène ou un groupement alkyle de 1 à 4 atomes de carbone (méthyle, éthyle, propyle, butyle n– et iso–),
p est zéro ou un nombre entier de 1 à 10 et de préférence égal à 3,
q est un nombre entier de 1 à 20 et de préférence égal à 1 ou 2,
$R'_1$ et $R'_2$ sont des groupements identiques ou différents, alkyles de 1 à 4 atomes de carbone (méthyle, éthyle, propyle, butyle n– et iso–,) et de préférence méthyle, et,
Z est un groupement $SO_3^-$ ou $COO^-$.

On peut citer également à titre d'exemple de tensio-actifs à groupement perfluoré, avantageusement utilisables, les tensio-actifs répondant à la formule IV plus particulièrement :

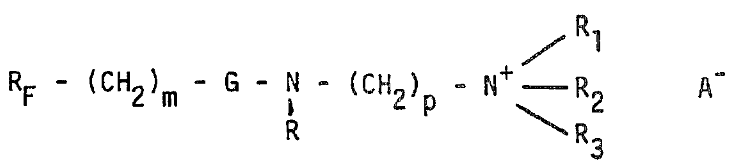 (IV)

dans laquelle les différents symboles ont les mêmes significations que précédemment.

Lorsque m est avantageusement égal 2, la mousse obtenue est particulièrement stable.

Les composés de formules (III) et (IV) et leur préparation ont été décrits dans les brevets suivants : FR 2088 699, FR 2088 941, FR 2128 028, FR 2127 287, FR 2390 426, FR 2453 145, FR 2084 888.

On peut citer aussi à titre d'exemple de tensio-actifs à groupement perfluoré avantageusement utilisables, les tensio-actifs répondant à la formule V plus particulièrement :

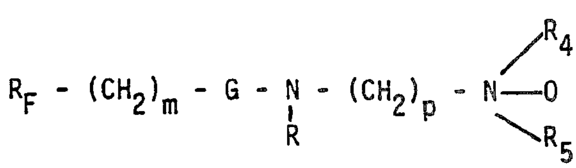 (V)

dans laquelle $R_4$ et $R_5$ sont des radicaux alkyles de 1 à 6 atomes de carbone, de préférence méthyle et dans laquelle les différents symboles ont les mêmes significations que précédemment.

Les composés de formule V et leur préparation ont été décrits dans les brevets FR 2035 589 et 2477 144.

On peut enfin utiliser avantageusement comme tensio-actifs à groupement perfluoré, les télomères perfluorés à groupement hydrophile (VI) décrits dans le brevet EP 0189 698, de formule générale :

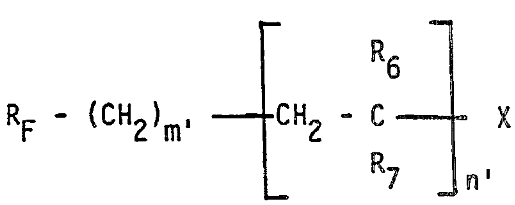 (VI)

dans laquelle $R_F$ a été décrit ci-dessus.
X représente un atome d'iode, de chlore ou de brome
m' est égal à zéro, 1 ou 2
n' est un nombre de 5 à 1000
$R_6$ est un atome d'hydrogène ou un radical méthyle
$R_7$ est un groupe $-COOH$ ou $-CONR_8R_9$, les symboles $R_8$ et $R_9$ identiques ou différents, représentant chacun un atome d'hydrogène ou un radical alkyle ou hydroxyalkyle.

Les composés répondant aux formules (I), (II), (III), (IV), (V) et (VI) présentent un coefficient de partage huile/eau sensiblement inférieur à celui que présenterait la même molécule non substituée par du fluor.

Un des avantages de l'utilisation de la mousse selon l'invention est que contrairement à ce qui peut se passer selon l'art antérieur lors de la récupération, il n'y a pas formation d'émulsion phase aqueuse-phase hydrocarbonée dans le puits de production.

Un autre avantage est que l'utilisation de produit selon l'invention ne nécessite que l'injection d'une quantité réduite de tensio-actif par rapport à ce qui était nécessaire dans l'art antérieur du fait que la mousse peut conserver sa structure en présence d'une phase hydrocarbonée.

On a obtenu d'excellents résultats avec le composé de formule générale (VII) :

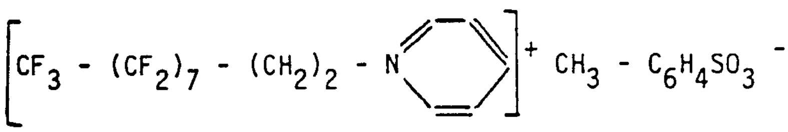 (VII)

dont le coefficient de partage huile/eau est sensiblement égal à 0 et dont la préparation a été décrite dans le brevet FR 1588 482.

On a également obtenu de très bons résultats de récupération assistée du pétrole en utilisant une mousse contenant un tensio-actif à groupement perfluoré répondant à la formule (VIII) et préparé selon le brevet FR 2084 888 :

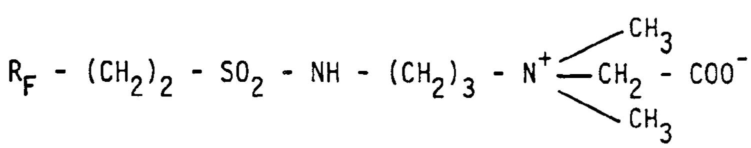 (VIII)

où $R_F$ est un radical perfluoré, de préférence linéaire contenant majoritairement un mélange de radicaux à 6, 8, 10, 12 atomes de carbone perfluorés. Le coefficient de partage de ce produit (VIII) est sensiblement égal à 0.

On pourra utiliser une solution comprenant un produit pur avec une chaîne $R_F$ bien définie (par exemple, $C_6F_{13}$, $C_8F_{17}$) ou des mélanges de produits avec des chaînes $R_F$ différentes (par exemple un mélange de composés où $R_F$ correspond en majorité à 6, 8, 10 et 12 atomes de carbone perfluoré).

Les solutions de composés tensio-actifs fluorés selon l'invention sont mises en contact avec des gaz, avantageusement non condensables tels que, par exemple, l'air, le dioxyde de carbone, l'azote, le méthane, le gaz naturel, et leurs mélanges, notamment les gaz d'utilité et de combustion sortant, par exemple, des générateurs de vapeur.

On peut aussi utiliser de la vapeur d'eau, de préférence en présence de gaz non condensable.

On obtient finalement une mousse susceptible, après injection dans le réservoir, de bloquer l'accès du gaz aux zones précédemment envahies, soit du fait de la gravité, soit du fait de contraste de perméabilité, augmentant donc ainsi le balayage par le gaz et entraînant une amélioration de la récupération du pétrole.

La qualité d'une mousse se définit comme étant le rapport du volume de gaz sur le volume total (volume de gaz et volume de la phase liquide). Les qualités susceptibles de satisfaire la formation d'une mousse varient de 70% à 99,9%. De préférence, on adoptera une qualité variant de 85% à 99%.

La phase liquide est constituée d'une solution aqueuse dont la concentration en produit actif peut varier de 0,05% à 10% poids et de préférence de 0,5% à 2% poids.

L'injection sur champ se fait par l'intermédiaire d'au moins un puits d'injection généralement à une pression sensiblement inférieure à la pression de fracturation du gisement considéré. Elle peut s'effectuer grâce à un

moyen de pompage, soit par injections séparées tout d'abord d'un bouchon de solution de tensio-actif, puis d'un bouchon de gaz non condensable, ces injections séparées pouvant être repétées, soit par injection simultanée d'au moins un bouchon de solution de tensio-actif et de gaz, la mousse se formant lorsque les produits sont en contact dans le gisement. Selon un mode de mise en oeuvre du produit, le premier bouchon est constitué d'une mousse à base de tensio-actif fluoré selon l'invention, les suivants peuvent être constitués de mousses non fluorées fabriquées selon l'art antérieur, ce qui présente un avantage de coût technique.

On peut aussi préparer la mousse en surface dans un générateur et on procède ensuite à son injection dans le gisement.

Lorsqu'on veut balayer avec de la vapeur d'eau, on injecte d'abord la solution de tensio-actif selon l'invention puis, soit simultanément de la vapeur d'eau et un gaz non condensable, soit du gaz non condensable et ensuite de la vapeur d'eau.

D'une manière générale, le gaz qui entre dans la composition de la mousse n'est pas nécessairement le même que celui utilisé normalement au cours de la production des hydrocarbures.

Le balayage au moins en partie du réservoir par la mousse ainsi constituée conduit à la production d'hydrocarbures qui sont récupérés par au moins un puits de production. Cette récupération est effectuée, de préférence, au moins jusqu'à la percée d'au moins un composé tensio-actif au puits de production.

L'invention sera mieux comprise à la vue des figures et photographies suivantes :

– les figures 1, 2 et 3 montrent le déplacement du front de mousse dans un milieu poreux homogène en présence de sulfonates suivant l'art antérieur et les figures 4, 5 et 6 suivant l'invention,

– les figures 7, 8 et 9 illustrent le déplacement du front de mousse dans un milieu poreux bistrate.

Les exemples qui suivent illustrent l'invention et ne sont pas limitatifs. On peut par exemple utiliser la mousse selon l'invention seule ou en mélange avec des mousses comprenant des tensio-actifs ne contenant pas de groupement perfluoré préparées selon l'art antérieur.

Une première série d'essais est réalisée à température ambiante dans des cellules en pyrex afin de visualiser le mode d'action de la mousse en milieu poreux et en présence d'une phase hydrocarbonée, la seconde série est réalisée dans un équipement conçu pour fonctionner en température en vue de déterminer l'efficacité des tensio-actifs considérés dans les conditions opératoires qui correspondent à l'injection de vapeur d'eau.

L'utilisation d'un générateur de mousse, bien que plus pratique d'emploi (et permettant d'obtenir une mousse de qualité constante et reproductible), n'est pas indispensable ; la mousse créée peut se déplacer dans le milieu poreux même lorsque les constituants gaz et tensio-actifs y sont injectés séparément soit simultanément, soit par bouchons alternés.

**EXEMPLE 1** (illustrant l'art antérieur)

Cette expérience est réalisée à température ambiante dans une cellule en pyrex de 5 cm de diamètre et de 38 cm de longueur, remplie de billes de verre d'un diamètre de 500 micromètres, et saturée à 100 % avec une huile synthétique (viscosité = 1,7mPa.s ; masse volumique = 860 kg/m3 à 20°C).

1a/ On balaie cette cellule par un débit d'azote de 0,1 litre par heure.

On observe la création de cheminements préférentiels et une percée très rapide du gaz (Fig. 1), la récupération d'huile à ce stade étant faible.

Après injection d'un volume de gaz correspondant à environ 100 fois le volume poreux, le taux de récupération d'huile est d'environ 50 % et n'évolue pratiquement plus (Fig. 2).

1b/ On alimente ensuite cette cellule constamment par 105 ml/h de mousse formée d'azote (0,1 litre par heure) et de solution de tensio-actif (5 ml par heure).

Le tensio-actif utilisé est de type classique ; c'est un dodécylbenzène sulfonate de sodium utilisé en solution aqueuse à 1% poids.

On observe très nettement (Fig. 3) une dégradation mécanique de la mousse caractérisée par la présence d'un front de plus en plus diffus au fur et à mesure que ce dernier progresse vers la face de sortie du milieu poreux.

D'autre part, le front de déplacement n'est pas net et donne lieu à une zone intermédiaire qui va de la mousse proprement dite à un mélange eau + tensio-actif/huile/gaz, le gaz ayant tendance à cheminer préférentiellement dans la partie supérieure du milieu poreux et la solution de tensio-actif dans la partie basse.

La mousse progresse lentement, et parallèlement aux zones de passages préférentiels, au fur et à mesure de l'élimination de la phase hydrocarbonée des zones concernées.

Ce n'est qu'après l'injection d'un volume de mousse correspondant à environ une centaine de volumes de pores que la saturation résiduelle en huile est pratiquement nulle.

**EXEMPLE 2**

On reprend l'exemple 1, mais au lieu d'injecter une mousse formée à partir d'une solution de tensio-actif classique comme dans 1b de l'exemple 1, on injecte dans les mêmes conditions une mousse formée à partir d'une solution aqueuse à 1% du tensio-actif défini par la formule (VII) ci-dessus.

Ce composé est obtenu par échange d'anion à partir de l'iodure de N-(heptadécafluorooctyl-2 éthyl) pyridinium décrit à l'exemple 1 du brevet FR 1588 482. Cet échange d'anion peut être réalisé par traitement de l'iodure avec de l'acide paratoluène sulfonique ou avec du paratoluène sulfonate de méthyle.

La solubilité de ce produit dans l'huile est inférieure aux limites de mesure.

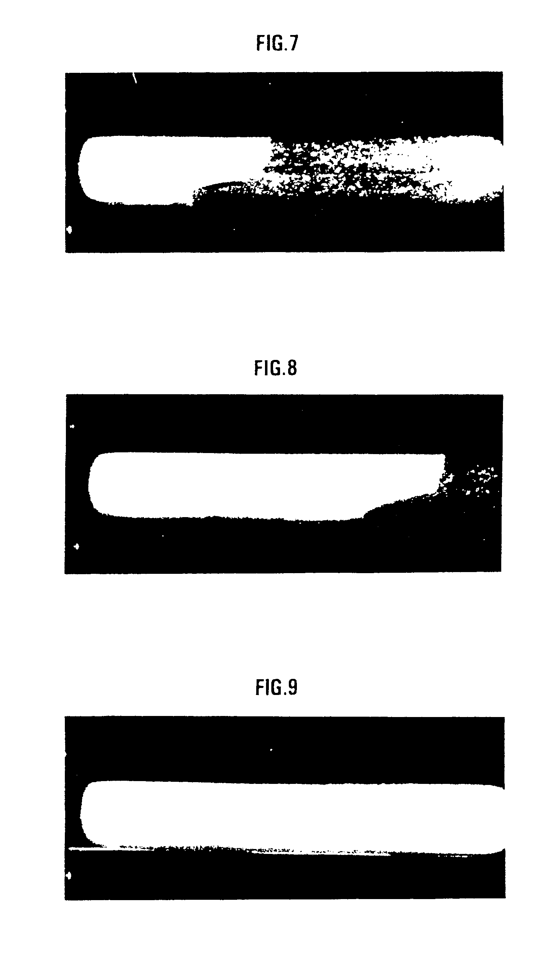

On met alors en évidence la création d'un banc d'huile poussé par un front de mousse stable très marqué, perpendiculaire à l'axe du milieu poreux (Fig. 4, 5) et qui progresse régulièrement, quelle que soit la position de ce dernier (horizontale ou verticale avec injection par le haut ou par le bas).

La saturation résiduelle en huile est sensiblement nulle après l'injection de mousse en quantité d'environ un volume de pore. La récupération est donc voisine de 100% (Fig. 6).

**EXEMPLE 3**

Un milieu poreux bi-strate est disposé dans une cellule de mêmes dimensions que dans l'exemple 1. Il est constitué de deux milieux de perméabilités différentes (billes de verre de 500 et 250 micromètres) juxtaposés dans le sens de la longueur et en communication. Le milieu est imprégné par de l'huile comme décrit à l'exemple 1.

On injecte le gaz et la mousse selon l'art antérieur de la même façon que dans l'exemple 1. La mousse commence par envahir le milieu le plus perméable, puis chasse l'huile du second milieu parallèlement et à partir de la surface de séparation des deux couches, envahissant progressivement les zones abandonnées par l'huile. Ce processus est cependant très long.

Après essai, la saturation résiduelle en huile est pratiquement nulle ; ce résultat est toutefois obtenu, comme dans le cas d'un milieu homogène, après l'injection de mousse en quantité d'environ une centaine de volumes de pores.

**EXEMPLE 4**

On reprend le milieu poreux bi-strate de l'exemple 3 et l'on injecte la mousse définie à l'exemple 2, constituée à partir du tensio-actif selon l'invention de la formule (VII).

On met alors en évidence la création d'un banc d'huile poussé par un front de mousse très marqué et stable et perpendiculaire à l'axe du ou des milieux poreux (Fig. 7) se déplaçant simultanément dans les deux zones. On observe tout d'abord que la mousse commence à pénétrer dans la région la plus perméable.

Une fois qu'une perte de charge suffisante a été atteinte dans cette couche, le balayage commence dans la partie la moins perméable. La répartition des pressions définit le retard du second front par rapport au premier et le déplacement se poursuit dans ces conditions d'équilibre (Fig. 8).

En fin d'essai, la récupération d'huile est d'environ 100 %, l'ensemble du milieu poreux ayant été balayé par environ un volume de pores de mousse (Fig. 9).

**EXEMPLE 5**

On reprend l'exemple 2 mais au lieu d'injecter une mousse formée à partir du tensioactif de formule (VII), on injecte dans les mêmes conditions une mousse préformée comme dans l'exemple 2 et renfermant un tensioactif tel que défini par la formule (VIII) ci-avant et préparé selon le brevet FR 2084 888, où $R_F$ est un radical perfluoré contenant en majeure partie un mélange de radicaux à 6, 8, 10 et 12 atomes de carbone dans les proportions respectives suivantes : 55%, 25%, 10% et 10% en nombre. Les résultats obtenus sont sensiblement identiques à ceux obtenus lors de l'exemple 2.

**EXEMPLE 6**

On reprend l'exemple 4 mais au lieu d'injecter une mousse formée à partir du tensioactif de formule (VII), on injecte dans les mêmes conditions une mousse préformée comme dans l'exemple 4 et renfermant le même tensio-actif que dans l'exemple 5. Les résultats obtenus sont sensiblement identiques à ceux obtenus lors de l'exemple 4.

**EXEMPLE 7**

On a répété l'exemple 2 et l'exemple 4 avec les produits a, b, c, d et e, ci-dessous :

a) 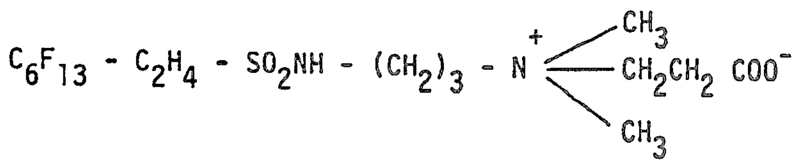

b) 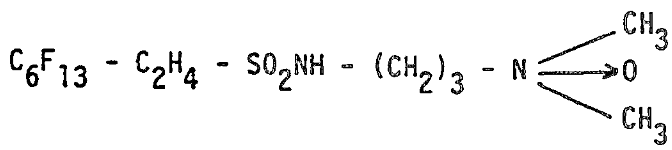

c) 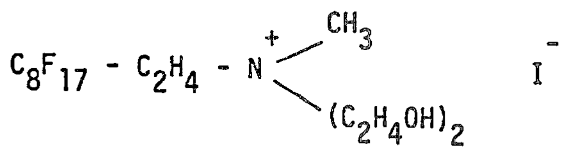

d) $C_6F_{13} - C_2H_4 - SO_2NH - (CH_2)_3 - \overset{+}{N} (CH_3)_3 \quad I^-$

e) 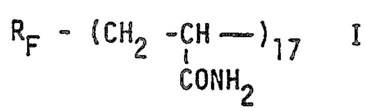

dans lequel $R_F$ est un mélange de radicaux perfluorés comprenant essentiellement $C_6F_{13}$, $C_8F_{17}$ et $C_{10}F_{21}$.Ce télomère e) a été décrit à l'exemple 45 du brevet EP 0189 698.

On a obtenu avec ces produits des résultats sensiblement équivalents à ceux obtenus lors des exemples 2 et 4.

**Revendications**

1. Procédé de récupération assistée d'hydrocarbures présents dans un réservoir souterrain dans lequel on injecte, au moins une fois, par au moins un puits d'injection, soit simultanément soit séparément, un bouchon d'une solution d'au moins un composé tensio-actif et un bouchon d'un gaz et/ou de vapeur d'eau de façon à constituer une mousse, on balaie au moins en partie ledit réservoir avec ladite mousse et on récupère les hydrocarbures par au moins un puits de production, caractérisé en ce que le composé tensio-actif répond à la formule générale (I)

$$R_F - Y - X \quad (I)$$

dans laquelle $R_F$ est un radical carboné perfluoré,
Y est une liaison directe ou un radical bivalent hydrocarboné qui peut contenir au moins un atome d'oxygène, de soufre et/ou d'azote, et
X est un groupement hydrophile.

2. Procédé selon la revendication 1, caractérisé en ce que le radical perfluoré $R_F$ est un radical perfluoroalkyle, linéaire ou ramifié contenant de 1 à 20 atomes de carbone, et avantageusement 4 à 14 atomes de carbone.

3. Procédé selon l'une quelconque des revendications 1 et 2, caractérisé en ce que ledit composé tensioactif a la formule (II) suivante :

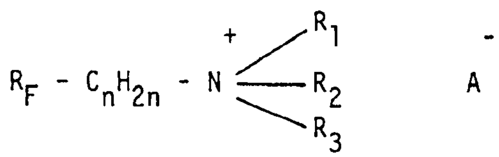

(II)

où : $R_F$ est défini comme ci-dessus dans la formule (I).
$-C_nH_{2n}-$ correspond au radical Y de la formule (I) et le reste de la molécule correspond au groupement X,
n est un nombre entier de 1 à 12, de préférence égal à 2,
les symboles $R_1$, $R_2$ et $R_3$ identiques ou différents, représentent chacun un atome d'hydrogène ou un radical alkyle contenant de 1 à 8 atomes de carbone, cycloalkyle contenant de 5 à 10 atomes de carbone, alkényle contenant de 2 à 8 atomes de carbone, cycloalkényle contenant de 5 à 10 atomes de carbone, hydroxyalkyle contenant 2 ou 3 atomes de carbone ou aryle, deux de ces symboles pouvant constituer ensemble un radical divalent lié à l'azote par deux simples liaisons, ou $R_1$, $R_2$ et $R_3$ constituent ensemble avec l'atome d'azote le reste d'une amine tertiaire aromatique dérivée de la pyridine et contenant de 5 à 18 atomes de carbone ; et
$A^-$ est un anion choisi dans le groupe formé par les ions halogénures, sulfate, alkylsulfate, phosphate, sulfonate, alkylsulfonate, arylsulfonate, alcanoate et hydroxyle.

4. Procédé selon l'une quelconque des revendications 1 et 2 caractérisé en ce que ledit composé tensioactif a la formule (III) suivante :

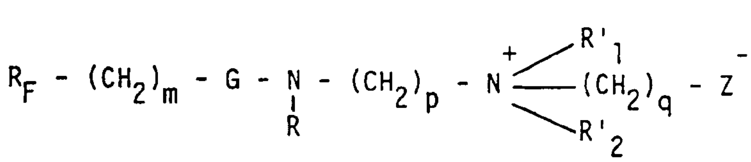

(III)

où

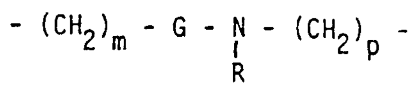

correspond au radical Y de la formule (I)
et où

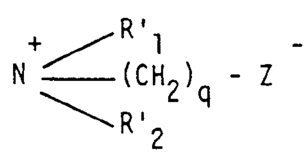

est le groupement X,
$R_F$ est le groupement perfluoré, défini dans la formule (I),
m est zéro ou un entier de 1 à 12, de préférence égal à 2,
G est un radical bivalent, CO ou $SO_2$,
R est un atome d'hydrogène ou un groupement alkyle de 1 à 4 atomes de carbone,

p est zéro ou un nombre entier de 1 à 10,
$R'_1$ et $R'_2$ sont des groupements identiques ou différents, alkyles de 1 à 4 atomes de carbone,
q est un nombre entier de 1 à 20,
et Z est un groupement sulfonate ou carboxylate.

5. Procédé selon l'une quelconque des revendications 1 et 2 caractérisé en ce que ledit composé tensioactif a la formule (IV) suivante :

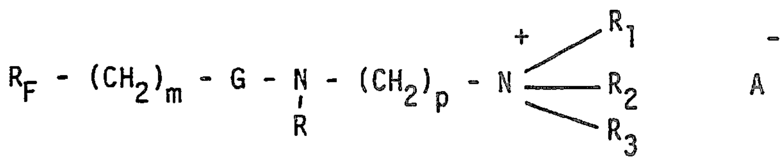 (IV)

dans laquelle les différents symboles ont les mêmes significations que ceux des revendications 1, 2, 3 et 4.

6. Procédé selon la revendication 1 caractérisé en ce que ledit composé tensio-actif a la formule (V) suivante :

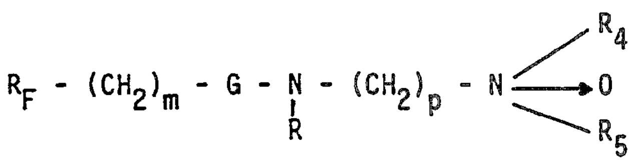 (V)

dans laquelle $R_4$ et $R_5$ sont des radicaux alkyles de 1 à 6 atomes de carbone,
les autres symboles ont les mêmes significations que ceux des revendications 1, 2 et 4.

7. Procédé selon la revendication 1 caractérisé en ce que ledit composé tensio-actif a la formule (VI) suivante :

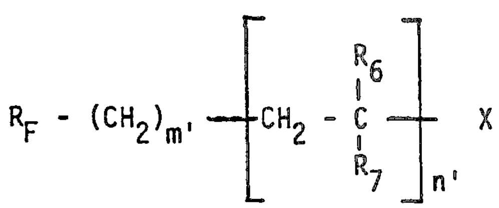 (VI)

dans laquelle :
$R_F$ a été décrit dans les revendications 1 et 2,
X représente un atome d'iode, de chlore ou de brome,
m' est égal à zéro, 1 ou 2,
n' est un nombre de 5 à 1000,
$R_6$ est un atome d'hydrogène ou un radical méthyle,
$R_7$ est un groupe –COOH ou $CONR_8R_9$, les symboles $R_8$ et $R_9$ identiques ou différents, représentant chacun un atome d'hydrogène ou un radical alkyle ou hydroxyalkyle.

8. Procédé selon la revendication 1 caractérisé en ce que le tensio-actif correspond à la formule générale (VII) :

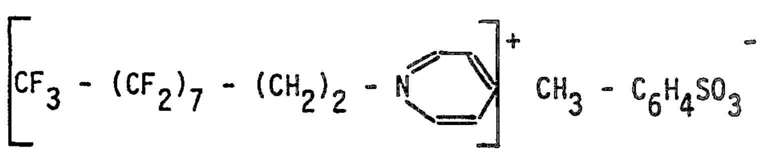 (VII)

9. Procédé selon la revendication 1 caractérisé en ce que letensio-actif correspond à la formule générale

(VIII) :

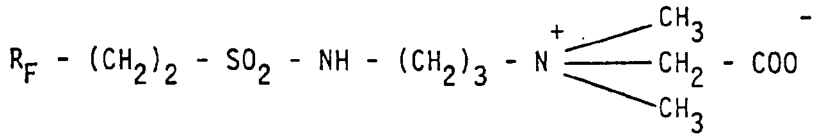

(VIII)

où $R_F$ est le radical perfluoré contenant en majeure partie un mélange avec 6, 8, 10 et 12 atomes de carbone perfluoré.

10. Procédé selon la revendication 1, caractérisé en ce que le composé tensio-actif à groupement perfluoré est dans une proportion variant de 0,05% à 10% en poids et de préférence de 0,5 à 2% en poids dans une solution aqueuse pour une qualité de mousse variant de 70% à 99,9% et de préférence 85% à 99%, et en ce que le gaz utilisé dans la préparation de la mousse est choisi dans le groupe formé par la vapeur d'eau, l'air, l'azote, les gaz d'utilité, le dioxyde de carbone, le méthane, le gaz naturel et leurs mélanges.

## Claims

1. A process for enhanced recovery of hydrocarbons present in a subsurface reservoir wherein is performed at least one injection,through at least one injection well,either simultaneously or separately,of a plug of a solution of at least one surfactant and a gas and/or steam plug,so as to form a foam, and wherein at least a part of said reservoir is swept by said foam and hydrocarbons are recovered from at least one producing well,characterized in that the surfactant complies with the general formula (I)

$$R_F - Y - X \quad (I)$$

wherein $R_F$ is a perfluoric carbon radical,
Y is a single bond or a divalent hydrocarbon radical containing at least one oxygen,sulfur and/or nitrogen atom, and
X is a hydrophilic group.

2. A process according to claim 1, characterized in that the perfluoric radical $R_F$ is a linear or branched perfluoroalkyl radical containing 1 to 20 carbon atoms, advantageously 4 to 14 carbon atoms.

3. A process according to any one of claims 1 and 2, characterized in that the surfactant complies with the following formula (II) :

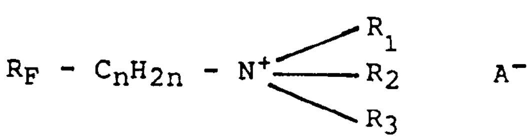

(II)

wherein :
$R_F$ is defined as in the above formula (I).
$-C_nH_{2n}-$ corresponds to radical Y of formula (I) and the remainder of the molecule corresponds to group X,
n is an integer from 1 to 12, preferably 2,
each of symbols $R_1$, $R_2$ and $R_3$, identical or different,represents a hydrogen atom or an alkyl radical of 1-8 carbon atoms, a cycloalkyl radical of 5-10 carbon atoms,an alkenyl radical of 2-8 carbon atoms, a cycloalkenyl radical of 5-10 carbon atoms, a hydroxyalkyl radical containing 2 or 3 carbon atoms or an aryl radical, two of said symbols optionally forming together a divalent radical linked with the nitrogen atom by two single bonds, or $R_1$, $R_2$ and $R_3$ form, together with the nitrogen atom, the remainder of an aromatic tertiary amine derived from pyridine and containing 5 to 18 carbon atoms ; and
$A^-$ is an anion selected from the group consisting of halide, sulfate, alkylsulfate, phosphate, sulfonate, alkylsulfonate, arylsulfonate, alkanoate and hydroxyl ions.

4. A process according to any one of claims 1 and 2, characterized in that said surfactant complies with the following formula (III) :

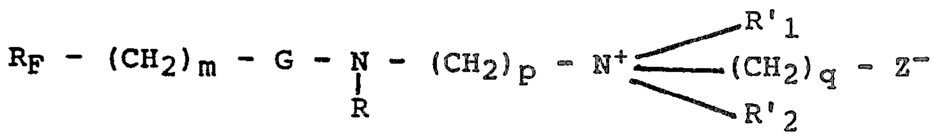 (III)

wherein :

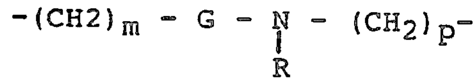

corresponds to radical Y of formula (I) and wherein :

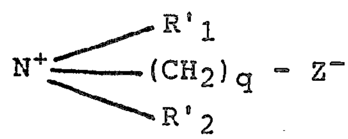

is the X group
$R_F$ is the perfluoric group defined in formula (I),
m is zero or an integer from 1 to 12, preferably 2,
G is a divalent radical, CO or $SO_2$,
R is a hydrocarbon atom or an alkyl group of 1-4 carbon atoms,
p is zero or an integer from 1 to 10,
$R'_1$ and $R'_2$, identical or different, are alkyl groups having 1 to 4 carbon atoms,
q is an integer from 1 to 20, and
Z is a sulfonate or carboxylate group.

5. A process according to any one of claims 1 and 2, characterized in that said surfactant complies with the following formula (IV) :

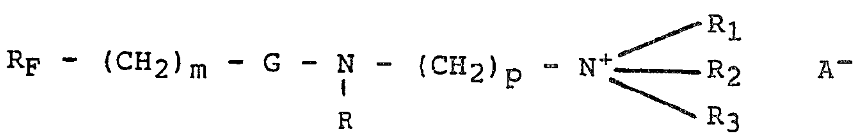 (IV)

wherein the different symbols have the same meaning as those of claims 1, 2, 3 and 4.

6. A process according to claim 1, characterized in that said surfactant complies with the following formula (V)

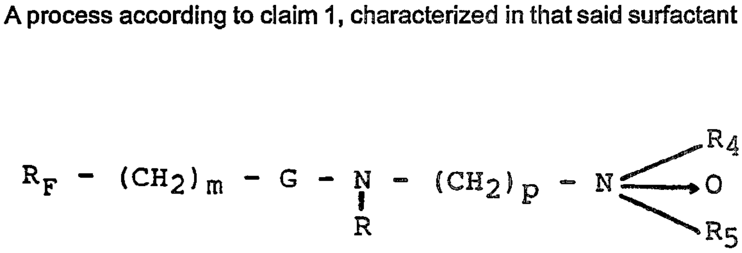 (V)

wherein R4 and $R_5$ are alkyl radicals of 1-6 carbon atoms, the other symbols having the same meanings as in claims 1, 2 and 4.

7. A process according to claim 1, characterized in that said surfactant complies with the following formula (VI) :

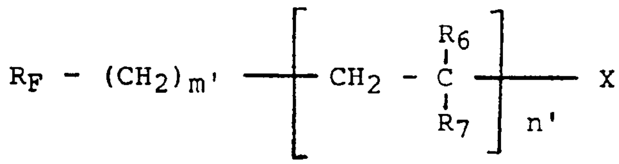 (VI)

wherein :
$R_F$ is as defined in claims 1 and 2,
X is a iodine, chlorine or bromine atom,
m' is zero, 1 or 2,
n' is a number from 5 to 1000,
$R_6$ is a hydrogen atom or a methyl radical,
$R_7$ is a –COOH or $CONR_8R_9$ group, each of symbols $R_8$ and $R_9$, identical or different, representing a hydrogen atom or an alkyl or hydroxyalkyl radical.

8. A process according to claim 1, characterized in that the surfactant complies with the general formula (VII) :

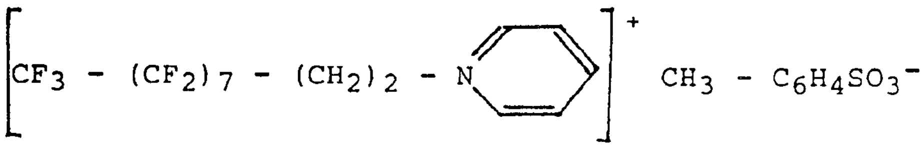 (VII)

9. A process according to claim 1, characterized in that the surfactant complies with the general formula (VIII) :

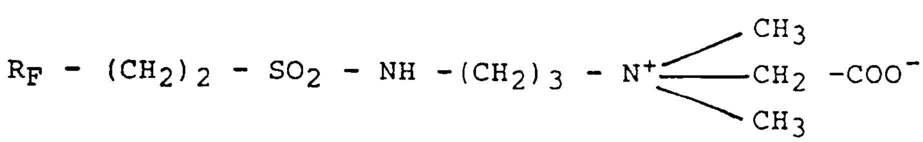 (VIII)

wherein $R_F$ is the perfluoric radical containing in major part a mixture with 6, 8, 10 and 12 atoms of perfluoric carbon.

10. A process according to claim 1, characterized in that,for a foam quality varying from 70% to 99.9% and preferably from 85 to 99%, the surfactant with perfluoric group is present in an aqueous solution in a proportion varying from 0.05 to 10%, preferably from 0.5 to 2% by weight, and in that the gas used for the foam preparation is selected from the group formed of steam, air, nitrogen, utility gases, carbon dioxide, methane, natural gas and mixtures thereof.

**Ansprüche**

1. Verfahren zur Wiedergewinnung von in einer unterirdischen Ölformation vorhandenen Kohlenwasserstoffen, in der zumindest einmal durch mindestens eine Förderbohrung, gleichzeitig oder getrennt, ein Lösungspropfen mit mindestens einer Komponente auf Basis einer oberflächenaktiven Substanz, und ein Gas- und/oder Wasserprofen eingespritzt wird, in der Weise, daß ein Schaum entsteht, wobei die Ölformation mindestens teilweise gespült wird, um um um somit, durch mindestens eine Förderbohrung, die Kohlenwasserstoffe wiederzugewinnen, durch mindestens einen Produktionsschacht, dadurch gekennzeichnet, daß die Komponente auf Basis eines oberflächenaktiven Stoffs, ein Stoff der nachstehend allgemeinen Formel (I) ist :

$$R_F - Y - X \quad (I)$$

worin
R – ein Perfluor-Radikal,
Y – eine direkte Verbindung oder ein zweiwertiges Kohlenwasserstoff-Radikal, das mindestens ein Sauerstoff, Schwefel- und/ oder Stickstoffatom enthalten kann,

und
X – eine hydrophile Gruppe
bedeuten.

2. Verfahren nach Anspruch 1, dadurch gekennzeichnet, daß das Perfluor-Radikal ein Perfluor-Alkyl-Radikal ist, linear oder verzweigt, mit 1 bis 20 KohlenstoffAtomen und vorteilhafterweise mit 4 bis 14 Kohlenstoffatomen.

3. Verfahren nach einem der Ansprüche 1 und 2, dadurch gekennzeichnet, daß die oberflächenaktive Komponente die nachstehende Formel (II) hat:

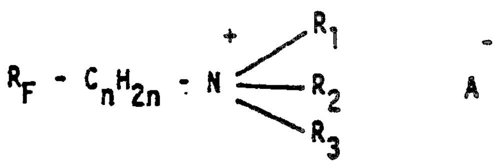
(II)

worin
$R_F$ – die oben in der Formel (I) angegebene Bedeutung hat,
$-C_nH_{2n}-$ dem Radikal Y der Formel (I) entspricht und der Rest des Moleküls der Gruppe X entspricht,
n– eine ganze Zahl zwischen 1 und 12, bevorzugt gleich 2, ist,
die Reste $R_1$, $R_2$, $R_3$, gleich oder verschieden sind und ein Wasserstoffatom oder ein Alkylradikal mit 1 bis 8 Kohlenstoffatomen, Zykloalkyle mit 5 bis 10 Kohlenstoffatomen, Alkenyle mit 2 bis 8 Kohlenstoffatomen, Zykloalkenyle mit 5 bis 10 Kohlenstoffatomen, Hydroxyalkyle mit 2 oder 3 ohlenstoffatomen oder Aryle bedeuten, wobei 2 dieser Reste zusammen ein zweiwertiges Radikal bilden, gebunden an das Stickstoffatom durch einfache Bindungen, oder $R_1$, $R_2$ und $R_3$ zusammen mit dem Stickstoffatom, den Rest eines tertiären, aromatischen Amins von Pyridin abgeleitet und enthaltend 5 bis 18 Kohlenstoffatome, darstellen,
und
$A^-$ ein Anion bedeutet, der Gruppe der Halogenide, Sulfate, Alkylsulfate, Phosphate, Sulfonate, Alkylsulfonate, Arylsulfonate, Alkanate, Hydroxyle gehörig.

4. Verfahren nach einem der Ansprüche 1 und 2, dadurch gekennzeichnet, daß die oberflächenaktive Komponente der nachstehenden Formel (II) entspricht

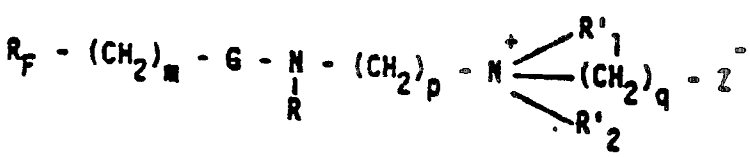
(III)

worin

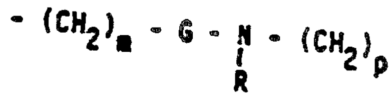

dem Radikal Y der Formel I
entspricht
und

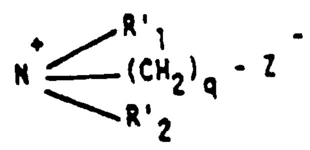

die Gruppe X bedeutet,
$R_F$ – Perfluor-Radikal, der oben in der Formel (I) angegebenen Bedeutung.
m – Null, oder eine ganze Zahl zwischen 1 und 2, vorzugsweise gleich 2,
G – ein zweiwertiges Radikal, CO oder $SO_2$,
R – ein Wasserstoffatom oder eine Alkylgruppe mit 1 bis 4 Kohlenstoffatomen,
p – Null oder eine gerade Zahl zwischen 1 und 10,
$R'_1$ und $R'_2$ gleiche oder verschiedene Alkylgruppen, mit 1 bis 4 Kohlenstoffatomen
q – eine ganze Zahl zwischen 1 und 20, und
Z – eine Sulfon- oder Carboxylgruppe ist
bedeuten

5. Verfahren nach einem der Ansprüche 1 und 2, dadurch gekennzeichnet, daß die oberflächenaktive Komponente der nachstehenden Formel (IV)

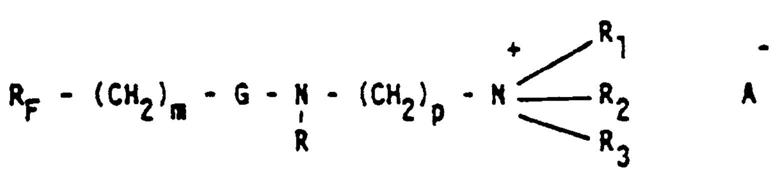 (IV)

worin die verschiedenen Symbole die in den Ansprüchen 1, 2, 3 und 4 angegebene Bedeutung besitzen.

6. Verfahren nach Anspruch 1, dadurch gekennzeichnet, daß die oberflächenaktive Komponente die nachstehende Formel (V) hat :

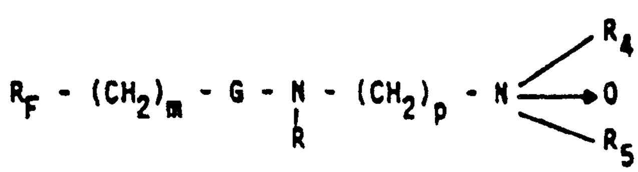 (V)

in der $R_4$ und $R_5$ Alkylradikale mit 1 bis 6 Kohlenstoffatomen sind, und die anderen Symbole die in den Ansprüchen 1, 2, und 4 angegebene Bedeutung haben.

7. Verfahren nach Anspruch 1, dadurch gekennzeichnet, daß die oberflächenaktive Komponente die nachstehende Formel (VI) hat :

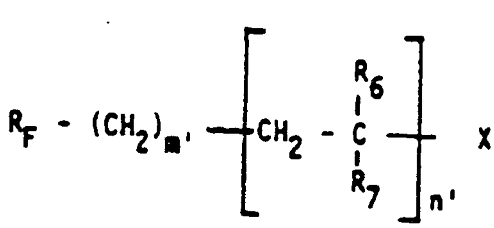 (VI)

worin
$R_F$ – in den Ansprüchen 1 und 2 beschrieben wurde,
X – ein Jod, -Chlor- oder Bromatom bedeutet,
m' – gleich 0, 1 oder 2 ist,
n' – eine Zahl zwischen 5 und 1000 ist,

$R_6$ – ein Waserstoffatom oder ein Methyl-Radikal bedeutet,
$R_7$ – eine COOH– oder $CONR_8R_9$ -Gruppe bedeutet worin $R_8$ und $R_9$ identisch oder verschieden sein kinnen und ein Wasserstoffatom oder ein Alkyl- oder Hydroxyalkyl-Radikal darstellen.

8. Verfahren nach Anspruch 1, dadurch gekennzeichnet, daß die oberflächenaktive Komponente der nachstehend allgemeinen Formel (VIII) entspricht :

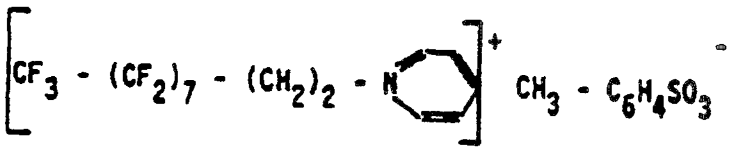

(VII)

9. Verfahren nach Anspruch 1, dadurch gekennzeichnet, daß die oberflächenaktive Komponente der nachstehend allgemeinen Formel entspricht :

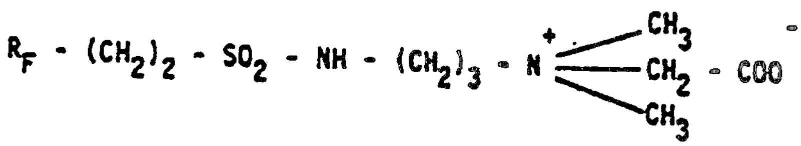

(VIII)

worin
$R_F$– ein Perfluor-Radikal bedeutet, in seinem überwiegenden Teil bestehend aus einer Mischung von 6, 8, 10 und 12 perfluorierten Kohlenstoffatomen.

10. Verfahren nach Anspruch 1, dadurch gekennzeichnet, daß die oberflächenaktive Komponente enthaltend Perfluor-Gruppen in Form einer wäßrigen Lösung der Konzentration zwischen 0,65 bis 10 Gew.-% und bevorzugt zwischen 0,5 und 2 Gew.-% eingesetzt wird, zur Gewinnung eines Schaumes von 70 bis 99,9 Gew.-%, bevorzugt zwischen 5 und 99 Gew.-% und,
daß das zur Gewinnung des Schaumes verwendete Gas aus der Gruppe vertreten durch Wasserdampf, Luft, Stickstoff, Gebrauchsgas, Kohlendioxid, Methan, Erdgas und ihre Mischungen, ausgewählt wird.

FIG.1

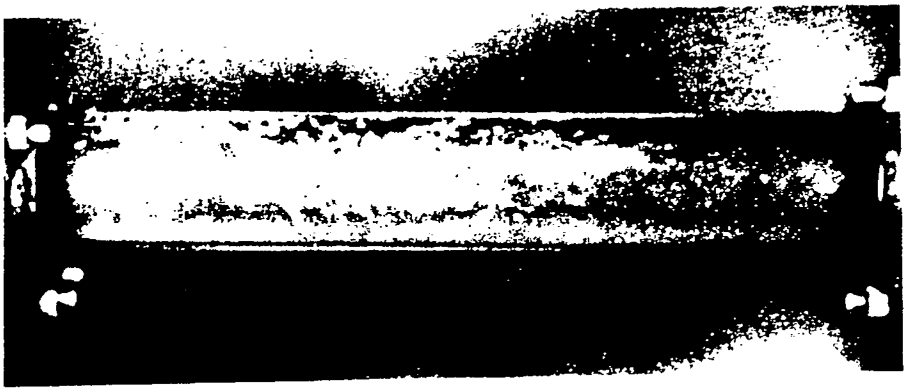

FIG.2

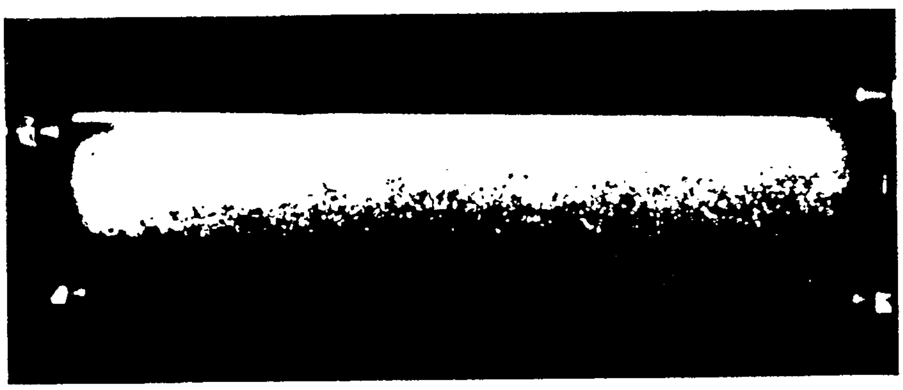

FIG.3

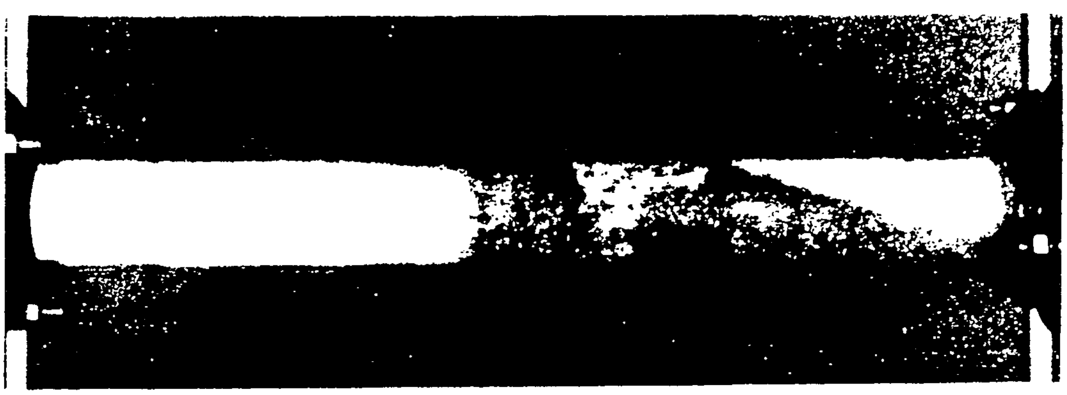

FIG.4

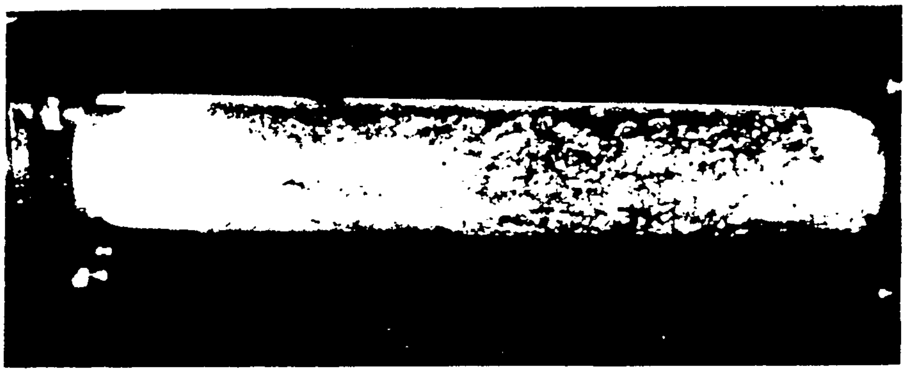

FIG.5

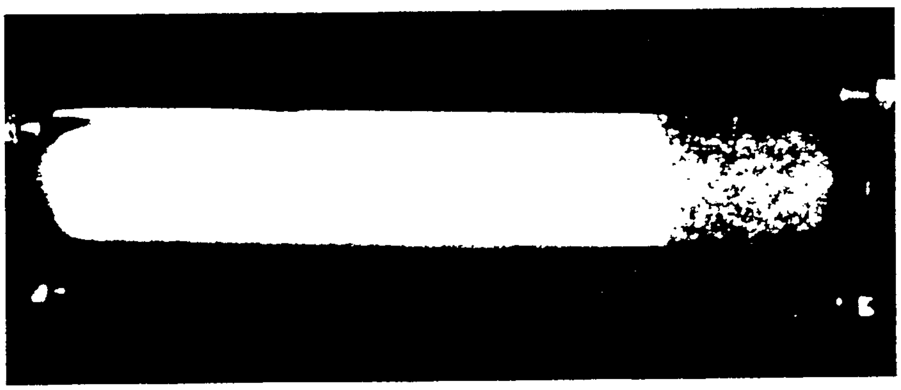

FIG.6

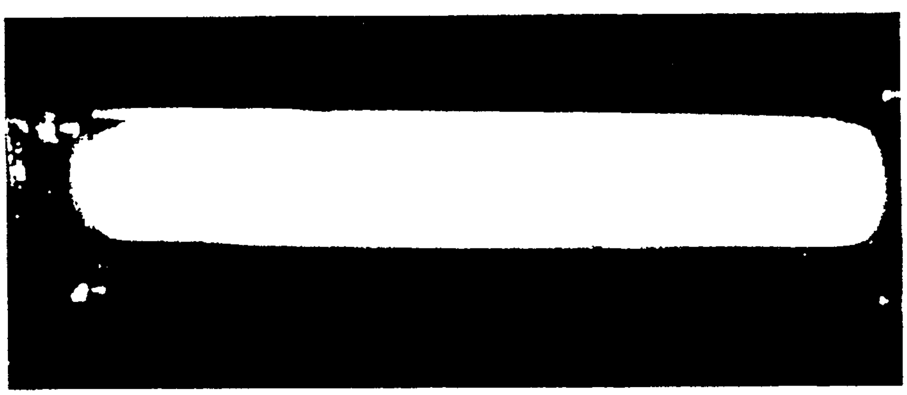

FIG.7

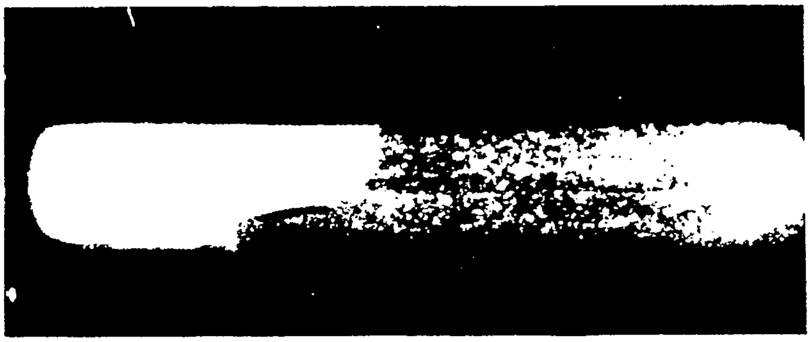

FIG.8

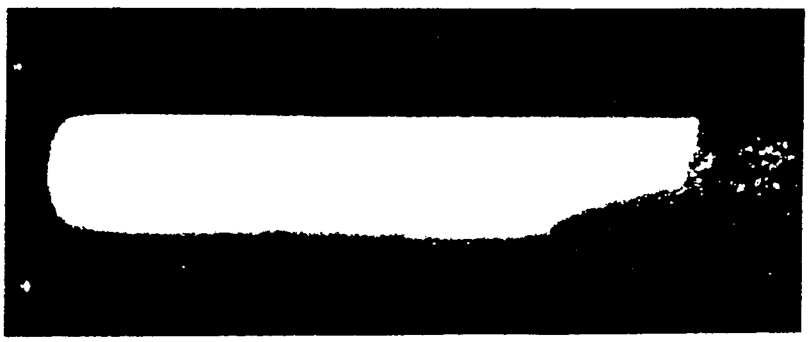

FIG.9